**Europäisches Patentamt**

**European Patent Office**

**Office européen des brevets**

(19)

(11) Publication number : **0 415 482 B1**

## (12) EUROPEAN PATENT SPECIFICATION

(45) Date of publication of patent specification :
**28.10.92 Bulletin 92/44**

(51) Int. Cl.[5] : **C02F 1/469**, C02F 1/46

(21) Application number : **90202229.2**

(22) Date of filing : **20.08.90**

(54) **Membrane electrolysis apparatus and method of removing metal ions using such apparatus.**

(30) Priority : **31.08.89 NL 8902195**

(43) Date of publication of application :
**06.03.91 Bulletin 91/10**

(45) Publication of the grant of the patent :
**28.10.92 Bulletin 92/44**

(84) Designated Contracting States :
**AT BE CH DE ES FR GB GR IT LI LU NL SE**

(56) References cited :
**DATABASE WPIL, accession no. 90-191917
[25], Derwent Publications Ltd, London, GB
CHEMICAL ABSTRACTS, vol. 98, no. 22, 30th
May 1983, page 338, abstract no. 185067s,
Columbus, Ohio, US
ESMIL MEMBRAANELECTROLYSE VOOR HET
VERWYDEREN VAN LOOD UIT ZOUTZUUR,
folder distributed at Aquatech '88, stand E346
of EsmilWater Systems, 19th - 23rd September
1988
METAL MASTER, folder distributed at
Aquatech '88, stand E346 of Esmil Water Sys-
tems, 19th - 23rd September 1988**

(56) References cited :
**CHEMICAL ABSTRACTS, vol. 109, no. 10, 5th
September 1988, page 584, abstract no.
82038z, Columbus, Ohio, US; J.P.P. THOLEN
etal.: "Membrane electrolysis, a new ap-
proach for treating electroplating was-
tewaters", TIJDSCHR. OPPERVLAKTETECH.
MATER. 1988,32(3), 60-1,71
CHEMICAL ABSTRACTS, vol. 109, no. 8, 22nd
August 1988, page 258, abstract no. 58813c,
Columbus, Ohio, US; J.P.P. THOLEN etal.:
"Membrane electrolysis of electroplating
wastewater"**

(73) Proprietor : **Industrial Consultants Hoogovens
B.V.
Nienoord 2 Postbus 2033
NL-1110 PA Diemen (NL)**

(72) Inventor : **Tholen, Johannes Petrus Paulus, Ir.
Drs.
Prins Mauritslaan 9
NL-1405 CS Bussum (NL)**
Inventor : **Rijkhof, Evert Jan
Johannes Poststraat 37
NL-3762 VL Soest (NL)**

(74) Representative : **Van Breda, Jacobus, Mr. Ir. et
al
HOOGOVENS GROEP BV P.O. Box 10.000
NL-1970 CA IJmuiden (NL)**

## Description

The invention relates to membrane electrolysis apparatus and to use of such apparatus for the removal of metal ions from an aqueous solution, especially the removal of unwanted metal ions from aqueous waste solutions.

A known membrane electrolysis cell for the removal of a metalliferous contamination from an aqueous solution has at least two compartments, an anode, a cathode and a semipermeable membrane located between the two compartments, wherein a first of the two compartments is provided with the anode and the second compartment is provided with the cathode and wherein the second compartment is suitable for holding an aqueous solution. Such a membrane electrolysis apparatus is described for example in PT-Procestechniek 42 (1987), no. 12, page 123. In the known apparatus the aqueous solution is fed for example to the second compartment in a continuous process in the form of a waste flow. In the waste flow salts of for example Zn, Pb, Ni or Cu are dissolved, and it is desired to remove the cations before disposing of the waste solution further.

In the first compartment there is the anode, often of stainless steel, and for example a 4% solution of NaOH. Between the first and second compartments there is a cation exchanging membrane, for example of Nafion (trade mark of Du Pont de Nemours).

The following problems arise with this known apparatus. During operation the sodium ions from the first compartment serve to maintain the electric current between anode and cathode. These sodium ions travel through the membrane from the first to the second compartment. The hydroxide ions remaining in the first compartment dissociate under the effect of the electric current and so oxygen is evolved. Consequently the sodium hydroxide concentration needs to be replenished constantly in order that the electric current may be maintained. The transported sodium ions cause an increased concentration in the second compartment. In order to prevent this leading to deposition of sodium salts, the aqueous solution in the second compartment needs to be continually changed. However, discharging the waste flow from the second compartment is problematical on account of the environmental effects associated with it.

The membrane electrolysis apparatus and the method in accordance with the invention are characterised in that the anode is a consumable metal anode and the semi-permeable membrane is an anion-exchanging membrane.

In the electrolysis, the consumable anode is dissolved and metal ions in the solution contacting the cathode are deposited at the cathode. The metal of the anode may be the same as or different from the metal of the ions deposited.

Suitable anodes are of Fe, Cu and Ni, and are preferably highly pure.

It is preferable that when the anode is of iron a solution of $FeCl_2$ is introduced into the first compartment. Iron is especially preferred as the anode.

With the invention maintenance of the electric current is by means of the negative ions of the salts whose metal is to be removed from the aqueous solution, for example chloride ions. To this end the membrane needs to be an anion-exchanging membrane, for example a Neosepta membrane (Neosepta is a trade mark of Tokuyama Soda Company Ltd., Japan). The chloride ions thus meet the metal ions in the anode compartment, which originate from the anode positioned in it, to form a salt. This salt may be recoverable as a useful product, e.g. if it is $FeCl_2$ which is a product usable as coagulant.

Consequently the invention can have an environmental advantage over the known apparatus, meaning that whereas the known apparatus produces environmentally harmful residual salts, use of the apparatus in accordance with the invention can produce an environmentally friendly, reusable residual product. There is also an advantage in operating economy; for maintenance of the electric current there is no need for continuous replenishment of the solution in the anode compartment as is the case with the known apparatus. Indeed with the invention the ion supplying the current is obtained from the solution from which metal ions are to be removed.

The invention will now be illustrated by reference to the accompanying drawing, in which:

Fig. 1 shows diagrammatically a membrane electrolysis apparatus in accordance with the prior art.

Fig. 2 shows diagrammatically a membrane electrolysis apparatus in accordance with the present invention.

In the two figures, the same reference numerals indicate corresponding parts.

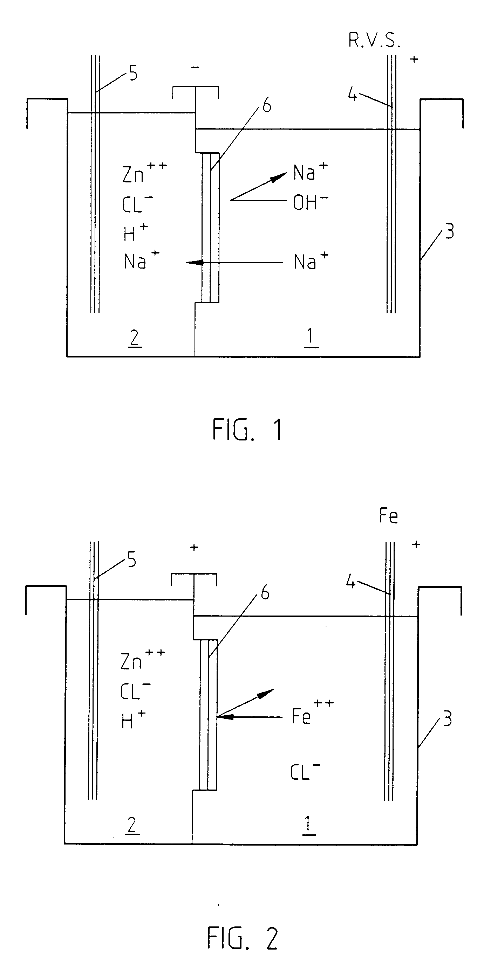

Fig. 1 and 2 show the prior art apparatus and an apparatus of the invention respectively, each comprising an electrolysis cell 3 which has a first (anode) compartment 1 and a second (cathode) compartment 2 in which respectively an anode 4 and a cathode 5 are located. A semipermeable membrane 6 separates the first compartment 1 from the second compartment 2. The aqueous solution to be cleaned is in the second compartment 2 and is typically a waste solution containing a contaminant in the form of a metal salt.

With the known apparatus of Fig. 1, the anode 4 is of stainless steel and the membrane 6 is a cation exchanging membrane of for example Nafion. A 4% sodium hydroxide solution is introduced into the anode compartment 1 and the electric current flow is supplied by transport of sodium ions from the solution in compartment 1, through the membrane 6 to compartment 2.

In both the apparatus in Fig. 1 and that in Fig. 2, the cathode 5 is typically of zinc, but other suitable materials may also be used. The inconvenience with the known apparatus of Fig. 1 is that the sodium hydroxide solution needs to be constantly replenished and that the sodium ions accumulate in the cathode compartment 2 in salt form. These salts have to be removed from that compartment, but discharging them is environmentally harmful.

With the apparatus of Fig. 2 embodying the invention the membrane 6 is an anion-exchanging membrane, for example a Neosepta membrane, and the anode 4 is a consumable anode of highly pure iron. Zinc chloride has to be removed from the aqueous solution which can be fed continuously into the cathode compartment 2 in a continuous operation as a waste flow, then the current transport is achieved in the electrolysis cell 3 by the chloride ions. When in the anode compartment 1 these chloride ions recombine with the dissolved iron ions originating from anode 4 into ferrous chloride. This ferrous chloride is, when collected, not harmful to the environment and may later find use as coagulant. Zinc is deposited at the cathode.

This process is started by introducing, for example a 4% $FeCl_2$ solution into the solution in compartment 1. During the further processing the solution does not need to be replenished.

The electrolysis is performed by applying a voltage at an appropriate level between the anode and the cathode to cause the following reactions:-
At the anode:
$$Fe \rightarrow Fe^{++} + 2e^-$$
At the cathode:
$$Zn^{++} + 2e^- \rightarrow Zn$$
An economic advantage of the invention is apparent from the following example.

## Example

Salts of Ni are to be removed from a waste flow. 737.5 gr Ni can be deposited by 1 kg NaOH in the conventional process using NaOH. Consequently at a NaOH cost price (1989) of Fl 0.80 per kg, recovering 1 kg of Ni costs Fl 1.08 with the conventional method. In accordance with the invention approximately 0.94 kg Fe is needed to recover 1 kg Ni, at a cost price of approximately Fl 1.-/kg (1989). Therefore, recovering 1 kg Ni costs Fl 0.94 with the method in accordance with the invention.

## Claims

1. A membrane electrolysis apparatus for the removal of metal ions from an aqueous solution, comprising an electrolysis cell having an anode compartment (1), a cathode compartment (2), an anode (4) located to contact liquid in said anode compartment, a cathode (5) located to contact said aqueous solution in said cathode department, and a semi-permeable membrane (6) arranged as a wall separating said anode and cathode compartments, characterized in that said anode (4) is a consumable metal anode and said membrane (6) is an anion-exchanging membrane adapted to permit anions to pass from said cathode compartment to said anode compartment.

2. A membrane electrolysis apparatus according to claim 1 wherein said anode is made of Fe, Cu or Ni.

3. A membrane electrolysis apparatus according to claim 1 wherein said anode is made of iron and said anode compartment (1) contains a solution comprising $FeCl_2$.

4. A method of removing metal ions from a waste aqueous solution comprising subjecting said solution to electrolysis with said solution in contact with a cathode (5) and said solution separated by a semi-permeable membrane (6) from an anode solution in contact with an anode (4) characterized in that said anode (4) is a consumable metal anode and said semi-permeable membrane (6) is anion-exchanging.

5. A method according to claim 4 wherein said anode is made of iron.

6. A method according to claim 4 wherein said anode solution contains $FeCl_2$.

7. A method according to claim 4 wherein said metal ions are selected from Zn, Pb, Ni and Cu ions.

## Patentansprüche

1. Membran-Elektrolysevorrichtung zur Entfernung von Metallionen aus einer wäßrigen Lösung, umfassend eine Elektrolysezelle mit einer Anodenkammer (1), einer Kathodenkammer (2), einer Anode (4), die so angeordnet ist, daß sie mit Flüssigkeit in der genannten Anodenkammer in Kontakt ist, einer Kathode (5), die so angeordnet ist, daß sie mit der wäßrigen Lösung in der genannten Kathodenkammer in Kontakt ist, und einer semipermeablen Membran (6), die als eine die Anoden- und die Kathodenkammer trennende Wand angeordnet ist, dadurch gekennzeichnet, daß die genannte Anode (4) eine verbrauchbare Metallanode ist und die genannte Membran (6) eine anionenaustauschende Membran ist, die Anionenübergang von der Kathodenkammer in die Anodenkammer erlaubt.

2. Membran-Elektrolysevorrichtung nach Anspruch 1, worin besagte Anode aus Fe, Cu oder Ni ist.

3. Membran-Elektrolysevorrichtung nach Anspruch 1, worin besagte Anode aus Eisen ist und besagte Anodenkammer (1) eine $FeCl_2$ enthaltende Lösung enthält.

4. Verfahren zur Entfernung von Metallionen aus einer Abwasserlösung, welches umfaßt, daß man diese Lösung der Elektrolyse unterwirft, wobei diese Lösung in Kontakt mit einer Kathode (5) ist und diese Lösung durch eine semipermeable Membran (6) von einer mit einer Anode (4) in Kontakt stehenden Anodenlösung getrennt ist, dadurch gekennzeichnet, daß die Anode (4) eine verbrauchbare Metallanode und die semipermeable Membran (6) anionenaustauschend ist.

5. Verfahren nach Anspruch 4, worin besagte Anode aus Eisen ist.

6. Verfahren nach Anspruch 4, worin besagte Anodenlösung $FeCl_2$ enthält.

7. Verfahren nach Anspruch 4, worin besagte Metallionen aus Zn-, Pb-, Ni- und Cu-Ionen ausgewählt werden.


**Revendications**

1. Appareil d'électrolyse à membrane pour l'élimination d'ions métalliques d'une solution aqueuse, comprenant une cellule d'électrolyse avec un compartiment d'anode (1), un compartiment de cathode (2), une anode (4) disposée pour être en contact avec le liquide dans ledit compartiment d'anode, une cathode (5) disposée pour être en contact avec ladite solution aqueuse dans ledit compartiment de cathode, et une membrane (6) semi-perméable, disposée en tant que paroi séparant lesdits compartiments d'anode et de cathode, caractérisé par le fait que ladite anode (4) est une anode métallique consommable et ladite membrane (6) est une membrane à échange d'anions, adaptée pour permettre aux anions de passer dudit compartiment de cathode audit compartiment d'anode.

2. Appareil d'électrolyse à membrane selon la revendication 1, dans lequel ladite anode est en Fe, Cu ou Ni.

3. Appareil d'électrolyse à membrane selon la revendication 1, dans lequel ladite anode est en fer et ledit compartiment d'anode (1) contient une solution comportant du $FeCl_2$.

4. Méthode d'élimination d'ions métalliques d'une solution aqueuse usée, comprenant l'opération consistant à soumettre ladite solution à l'électrolyse, ladite solution étant en contact avec une cathode (5) et ladite solution étant séparée par une membrane (6) semi-perméable d'une solution d'anode en contact avec une anode (4), caractérisée par le fait que ladite anode (4) est une anode métallique consommable et que ladite membrane (6) semi-perméable est à échange d'anions.

5. Méthode selon la revendication 4, dans laquelle ladite anode est en fer.

6. Méthode selon la revendication 4, dans laquelle ladite solution d'anode contient du $FeCl_2$.

7. Méthode selon la revendication 4, dans laquelle lesdits ions métalliques sont sélectionnés parmi des ions de Zn, Pb, Ni et Cu.

FIG. 1

FIG. 2